# EUROPEAN PATENT APPLICATION

(11) **EP 4 608 030 A1**
(43) Date of publication of application: **27.08.2025**
(21) Application number: 23878775.8
(22) Date of filing: 07.08.2023
(51) Int. Cl.: H04W 72/04

(54) **DATA TRANSMISSION METHOD AND APPARATUS**

(30) Priority: 18.10.2022 CN 202211275719
(71) Applicant: Datang Mobile Communications Equipment Co., Ltd., Beijing 100085 (CN)
(72) Inventor: ZHANG, Huiying, Beijing 100085 (CN); CHEN, Li, Beijing 100085 (CN); ZHANG, Dajun, Beijing 100085 (CN); ZHAO, Jinbo, Beijing 100085 (CN)
(74) Representative: Studio Torta S.p.A.
(86) International application number: PCT/CN2023/111564
(87) International publication number: WO 2024/082779

(57) **Abstract**

The present disclosure discloses a data transmission method and apparatus, for scenarios where a terminal communicates with a network through multiple transmission network elements belonging to different DUs, scheduling of the multiple transmission network elements belonging to different DUs is achieved through one of the DUs, thereby more flexibly coordinating data transmission between UE and the multiple transmission network elements belonging to different DUs. The present disclosure provides a data transmission method, the method includes: determining a transmission network element group required for data transmission with a terminal, where the transmission network element group includes at least one first transmission network element and at least one second transmission network element, the first transmission network element belongs to a first distributed unit, and the second transmission network element belongs to a second distributed unit; and generating scheduling information of the transmission network element group, and notifying the terminal through at least one transmission network element in the transmission network element group, for data transmission between the transmission network element group and the terminal.

## Description

### CROSS-REFERENCE TO RELATED APPLICATION

The present disclosure claims priority to Chinese Patent Application No. 202211275719.7, entitled "DATA TRANSMISSION METHOD AND APPARATUS", filed with the China National Intellectual Property Administration on October 18, 2022, which is hereby incorporated by reference in its entirety.

### TECHNICAL FIELD

The present application relates to the field of communication technologies and, in particular, to a data transmission method and apparatus.

### BACKGROUND

In 5G, among carrier aggregation (Carrier Aggregation, CA), dual-connectivity (Dual-Connectivity, DC), and supplementary upLink (Supplementary UpLink, SUL), CA requires multiple component carriers (CC) to be in the same distributed unit (Distributed Unit, DU), DC is a dual-link between two base stations, using two media access control (Media Access Control, MAC) for data scheduling and transmission, while SUL is within the same cell. These technologies can improve the throughput and reliability of uplink and downlink data transmission for terminals in specific scenarios.

### SUMMARY

Embodiments of the present disclosure provide a data transmission method and apparatus, for scenarios where a terminal communicates with a network through multiple transmission network elements belonging to different DUs, scheduling of the multiple transmission network elements belonging to different DUs is achieved through one of the DUs, thereby more flexibly coordinating data transmission between UE and the multiple transmission network elements belonging to different DUs.

On a first distributed unit side, an embodiment of the present disclosure provides a data transmission method which includes:
determining a transmission network element group required for data transmission with a terminal, where the transmission network element group includes at least one first transmission network element and at least one second transmission network element, the first transmission network element belongs to a first distributed unit, and the second transmission network element belongs to a second distributed unit;
generating scheduling information of the transmission network element group, and notifying the terminal through at least one transmission network element in the transmission network element group, for data transmission between the transmission network element group and the terminal.

By using this method, the transmission network element group which is required for data transmission with the terminal and includes at least one first transmission network element and at least one second transmission network element is determined, where the first transmission network element belongs to a first distributed unit, and the second transmission network element belongs to a second distributed unit; the scheduling information of the transmission network element group is then generated, and the terminal is notified through at least one transmission network element in the transmission network element group. In this way, for scenarios where a terminal communicates with a network through multiple transmission network elements belonging to different DUs, scheduling of the multiple transmission network elements belonging to different DUs is achieved through one of the DUs, thereby more flexibly coordinating data transmission between UE and the multiple transmission network elements belonging to different DUs.

In some implementations, the generating the scheduling information of the transmission network element group includes:
generating, based on resource configuration information of the first transmission network element, scheduling information of the first transmission network element;
   and/or,
acquiring resource configuration information of the second transmission network element from the second distributed unit;
generating, based on the resource configuration information of the second transmission network element, scheduling information of the second transmission network element.

In some implementations, the method further includes:
notifying the second distributed unit of scheduling information of the second transmission network element.

In some implementations, the method further includes:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, where the downlink media access control protocol data unit of the second transmission network element is forwarded by the second distributed unit to the second transmission network element, and is sent to the terminal through the second transmission network element.

In some implementations, the method further includes:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

On a second transmission network element side, an embodiment of the present disclosure provides a data transmission method which includes:
receiving a resource request of a second transmission network element sent by a first distributed unit configured for a terminal, where the second transmission network element belongs to a second distributed unit configured for the terminal;
sending resource configuration information of the second transmission network element to the first distributed unit, for the first distributed unit to generate scheduling information of the second transmission network element; and notifying the terminal through at least one transmission network element in the transmission network element group, for data transmission between the transmission network element group and the terminal, where the transmission network element group includes at least one first transmission network element and at least one second transmission network element, where the first transmission network element belongs to the first distributed unit.

In some implementations, the method further includes:
receiving the scheduling information of the second transmission network element and/or configuration information of the second transmission network element sent by the first distributed unit.

In some implementations, the method further includes:
receiving a downlink media access control protocol data unit of the second transmission network element sent by the first distributed unit, and sending the downlink media access control protocol data unit of the second transmission network element to the second transmission network element.

In some implementations, the method further includes:
receiving an uplink media access control protocol data unit from the terminal sent by the second transmission network element, and sending the uplink media access control protocol data unit to the first distributed unit.

On a transmission network element side, an embodiment of the present disclosure provides a data transmission method which includes:
receiving scheduling information of a transmission network element group sent by a first distributed unit configured for a terminal, where the transmission network element group includes at least one first transmission network element and at least one second transmission network element, where the first transmission network element belongs to the first distributed unit, and the second transmission network element belongs to a second distributed unit;
notifying the terminal of the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some embodiments, the method further includes:
performing data transmission with the terminal based on scheduling information of a local transmission network element.

On a terminal side, an embodiment of the present disclosure provides a data transmission method which includes:
receiving scheduling information of a transmission network element group through at least one transmission network element in the transmission network element group, where the transmission network element group includes at least one first transmission network element and at least one second transmission network element, where the first transmission network element belongs to a first distributed unit and the second transmission network element belongs to a second distributed unit;
performing data transmission with the transmission network element group according to the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the performing data transmission with the transmission network element group according to the scheduling information of the transmission network element group includes:
for any transmission network element, performing data transmission with the transmission network element in the transmission network element group according to scheduling information of the transmission network element.

On a first distributed unit side, an embodiment of the present disclosure provides a data transmission apparatus which includes a memory, a transceiver and a processor, where
the memory is configured to store a computer program; the transceiver is configured to transmit and receive data under control of the processor; and the processor is configured to read the computer program from the memory and perform following operations:
determining a transmission network element group required for data transmission with a terminal, where the transmission network element group includes at least one first transmission network element and at least one second transmission network element, the first transmission network element belongs to a first distributed unit, and the second transmission network element belongs to a second distributed unit;
generating scheduling information of the transmission network element group, and notifying the terminal through at least one transmission network element in the transmission network element group, for data transmission between the transmission network element group and the terminal.

In some implementations, the generating the scheduling information of the transmission network element group includes:
generating, based on resource configuration information of the first transmission network element, scheduling information of the first transmission network element;
   and/or,
acquiring resource configuration information of the second transmission network element from the second distributed unit;
generating, based on the resource configuration information of the second transmission network element, scheduling information of the second transmission network element.

In some implementations, the processor is further configured to read the computer program from the memory and perform following operations:
notifying the second distributed unit of scheduling information of the second transmission network element.

In some implementations, the processor is further configured to read the computer program from the memory and perform following operations:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, where the downlink media access control protocol data unit of the second transmission network element is forwarded by the second distributed unit to the second transmission network element, and is sent to the terminal through the second transmission network element.

In some implementations, the processor is further configured to read the computer program from the memory and perform following operations:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

On a second distributed unit side, an embodiment of the present disclosure provides another data transmission apparatus which includes a memory, a transceiver and a processor, where
the memory is configured to store a computer program; the transceiver is configured to transmit and receive data under control of the processor; and the processor is configured to read the computer program from the memory and perform following operations:
receiving a resource request of a second transmission network element sent by a first distributed unit configured for a terminal, where the second transmission network element belongs to a second distributed unit configured for the terminal;
sending resource configuration information of the second transmission network element to the first distributed unit, for the first distributed unit to generate scheduling information of the second transmission network element; and notifying the terminal through at least one transmission network element in a transmission network element group, for data transmission between the transmission network element group and the terminal, where the transmission network element group includes at least one first transmission network element and at least one second transmission network element, where the first transmission network element belongs to the first distributed unit.

In some implementations, the processor is further configured to read the computer program from the memory and perform following operations:
receiving the scheduling information of the second transmission network element and/or configuration information of the second transmission network element sent by the first distributed unit.

In some implementations, the processor is further configured to read the computer program from the memory and perform following operations:
receiving a downlink media access control protocol data unit of the second transmission network element sent by the first distributed unit, and sending the downlink media access control protocol data unit of the second transmission network element to the second transmission network element.

In some implementations, the processor is further configured to read the computer program from the memory and perform following operations:
receiving an uplink media access control protocol data unit from the terminal sent by the second transmission network element, and sending the uplink media access control protocol data unit to the first distributed unit.

On a transmission network element side, an embodiment of the present disclosure provides a data transmission apparatus which includes a memory, a transceiver and a processor, where
the memory is configured to store a computer program; the transceiver is configured to transmit and receive data under control of the processor; and the processor is configured to read the computer program from the memory and perform following operations:
receiving scheduling information of a transmission network element group sent by a first distributed unit configured for a terminal, the transmission network element group including at least one first transmission network element and at least one second transmission network element, where the first transmission network element belongs to the first distributed unit, and the second transmission network element belongs to a second distributed unit;
notifying the terminal of the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the processor is further configured to read the computer program from the memory and perform following operations:
performing data transmission with the terminal based on scheduling information of a local transmission network element..

On a terminal side, an embodiment of the present disclosure provides a data transmission apparatus which includes a memory, a transceiver and a processor, where
the memory is configured to store a computer program; the transceiver is configured to transmit and receive data under control of the processor; and the processor is configured to read the computer program from the memory and perform following operations:
receiving scheduling information of a transmission network element group through at least one transmission network element in the transmission network element group, where the transmission network element group includes at least one first transmission network element and at least one second transmission network element, where the first transmission network element belongs to a first distributed unit and the second transmission network element belongs to a second distributed unit;
performing data transmission with the transmission network element group according to the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the performing data transmission with the transmission network element group according to the scheduling information of the transmission network element group includes:
for any transmission network element, performing data transmission with the transmission network element in the transmission network element group according to scheduling information of the transmission network element.

On a first distributed unit side, an embodiment of the present disclosure provides another data transmission apparatus which includes:
a transmission network element group determining unit, configured to determine a transmission network element group required for data transmission with a terminal, where the transmission network element group includes at least one first transmission network element and at least one second transmission network element, the first transmission network element belongs to a first distributed unit, and the second transmission network element belongs to a second distributed unit;
a scheduling unit, configured to generate scheduling information of the transmission network element group, and notify the terminal through at least one transmission network element in the transmission network element group, for data transmission between the transmission network element group and the terminal.

On a second distributed unit side, an embodiment of the present disclosure provides another data transmission apparatus which includes:
a resource request receiving unit, configured to receive a resource request of a second transmission network element sent by the first distributed unit configured for a terminal, where the second transmission network element belongs to a second distributed unit configured for the terminal;
a resource configuration sending unit, configured to send resource configuration information of the second transmission network element to the first distributed unit, for the first distributed unit to generate scheduling information of the second transmission network element; and notify the terminal through at least one transmission network element in a transmission network element group, for data transmission between the transmission network element group and the terminal, where the transmission network element group includes at least one first transmission network element and at least one second transmission network element, where the first transmission network element belongs to the first distributed unit.

On a transmission network element side, an embodiment of the present disclosure provides another data transmission apparatus which includes:
a scheduling information receiving unit, configured to receive scheduling information of a transmission network element group sent by a first distributed unit configured for the terminal, the transmission network element group including at least one first transmission network element and at least one second transmission network element, where the first transmission network element belongs to the first distributed unit, and the second transmission network element belongs to a second distributed unit;
a scheduling information notifying unit, configured to notify the terminal of the scheduling information of the transmission network element group.

On a terminal side, an embodiment of the present disclosure provides another data transmission apparatus which includes:
a scheduling information acquiring unit, configured to receive scheduling information of a transmission network element group through at least one transmission network element in the transmission network element group, where the transmission network element group includes at least one first transmission network element and at least one second transmission network element, where the first transmission network element belongs to a first distributed unit and the second transmission network element belongs to a second distributed unit;
a transmission unit, configured to perform data transmission with the transmission network element group according to the scheduling information of the transmission network element group.

Another embodiment of the present disclosure provides a non-transitory computer-readable storage medium, which stores a computer program for enabling a processor to execute any of the above methods.

### BRIEF DESCRIPTION OF THE DRAWINGS

In order to more clearly describe the technical solution in embodiments of the present disclosure, in the following, the drawings that need to be used in the description of the embodiments will be briefly introduced. Apparently, the drawings in the following description are a part of embodiments of the present disclosure. For the persons of ordinary skill in the art, other drawings can be obtained based on these drawings without paying creative labor.
FIG. 1 is a flowchart of a data transmission method on a first distributed unit side provided in an embodiment of the present disclosure.
FIG. 2 is a flowchart of a data transmission method on a second distributed unit side provided in an embodiment of the present disclosure.
FIG. 3 is a flowchart of a data transmission method on a transmission network element side provided in an embodiment of the present disclosure.
FIG. 4 is a flowchart of a data transmission method on a terminal side provided in an embodiment of the present disclosure.
FIG. 5 is a schematic diagram of an application scenario of various embodiments provided in the present disclosure.
FIG. 6 is a specific flowchart of a data transmission method in Embodiment 1 provided in an embodiment of the present disclosure.
FIG. 7 is a specific flowchart of a data transmission method in Embodiment 2 provided in embodiment of the present disclosure.
FIG. 8 is a specific flowchart of a data transmission method in Embodiment 3 provided in an embodiment of the present disclosure.
FIG. 9 is a specific flowchart of a data transmission method in Embodiment 4 provided in an embodiment of the present disclosure.
FIG. 10 is a schematic structural diagram of a data transmission apparatus on a network side provided in an embodiment of the present disclosure.
FIG. 11 is a schematic structural diagram of a data transmission apparatus on a terminal side provided in an embodiment of the present disclosure.
FIG. 12 is a schematic structural diagram of a data transmission apparatus on a first distributed unit side provided in an embodiment of the present disclosure.
FIG. 13 is a schematic structural diagram of a data transmission apparatus on a second distributed unit side provided in an embodiment of the present disclosure.
FIG. 14 is a schematic structural diagram of a data transmission apparatus on a transmission network element side provided in an embodiment of the present disclosure.
FIG. 15 is a schematic structural diagram of a data transmission apparatus on a terminal side provided in an embodiment of the present disclosure.

### DESCRIPTION OF EMBODIMENTS

The term "and/or" in the present disclosure describes an association relationship between associated objects, indicating that there can be three kinds of relationships, for example, A and/or B, which may indicate that there are three situations: A alone, A and B simultaneously, and B alone. The character "/" generally indicates that the preceding and following associated objects are an "or" relationship.

The term "multiple" in the embodiments of the present disclosure refers to two or more, and other quantifiers are similar.

In the following, a clear and complete description of the technical solutions in the embodiments of the present disclosure will be provided with reference to the accompanying drawings. Apparently, the described embodiments are only a part of the embodiments of the present disclosure, but not all embodiments. Based on the embodiments in the present disclosure, all other embodiments obtained by persons of ordinary skill in the art without paying creative labor are within the scope of protection of the present disclosure.

Embodiments of the present disclosure provide a data transmission method and apparatus, for scenarios where a terminal communicates with a network through multiple transmission network elements belonging to different DUs, scheduling of the multiple transmission network elements belonging to different DUs is achieved through one of the DUs (for example, referred to as a first DU or a master DU), thereby more flexibly coordinating data transmission between UE and the multiple transmission network elements belonging to different DUs.

Hereinafter, the method and apparatus are based on the same application concept. Due to the similarity in the principle of problem-solving between the method and the apparatus, the implementation of the apparatus and the method can refer to each other, and the repetition will be avoided for brevity.

The terms "first", "second", etc. (if exists) in the specification of embodiments of the present disclosure and claims and the accompanying drawings are used to distinguish similar objects and do not necessarily need to be used to describe a specific order or sequence. It should be understood that data used in such way can be interchanged in appropriate circumstances, so that the embodiments described herein can be implemented in an order other than that is illustrated or described herein. In addition, the terms "including" and "having", as well as any variations thereof, are intended to cover non-exclusive inclusions, such as processes, methods, systems, products, or devices that include a series of steps or units are not necessarily limited to those clearly listed steps or units, but may include other steps or units that are not clearly listed or inherent to these processes, methods, products, or devices.

The following examples and embodiments will only be understood as illustrative examples. Although this specification may mention "a", "one," or "multiple" examples or embodiments in several places, this does not mean that every such mention is related to the same example or embodiment, nor does it mean that the feature is only applicable to a single example or embodiment. Individual features of different embodiments can also be combined to provide other embodiments. In addition, terms such as "including" and "comprising" should be understood as not limiting the described embodiments to only those features already mentioned; such examples and embodiments may also include features, structures, units, modules, etc. that are not specifically mentioned.

The technical solution provided in the embodiments of the present disclosure can be applied to various systems, especially a 5G system. For example, an applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD), a long term evolution advanced (Long Term Evolution Advanced, LTE-A) system, a universal mobile telecommunication system (Universal Mobile Telecommunication System, UMTS), a worldwide interoperability for microwave access (Worldwide Interoperability for Microwave Access, WiMAX) system, a 5G new radio (New Radio, NR) system, and etc. All of these systems include a terminal device and a network device. The systems can also include a core network component, such as an evolved packet system (Evolved Packet System, EPS), a 5G System (5GS), and etc.

The terminal device involved in the embodiments of the present disclosure may be a device that provides voice and/or data connectivity to a user, a handheld device with wireless connection functions, or another processing device connected to a wireless modem. In different systems, the names of the terminal device may also be different. For example, in a 5G system, the terminal device may be called as a user equipment (User Equipment, UE). The wireless terminal device may communicate with one or more core networks (Core Network, CN) through a RAN. The wireless terminal device may be a mobile terminal device, such as a mobile phone (or a "cellular" phone) and a computer with a mobile terminal device. For example, it may be a portable, pocket, handheld, computer-built or vehicle-mounted mobile apparatus, which exchanges language and/or data with the wireless access network. For example, a personal communication service (Personal Communication Service, PCS) telephone, a cordless telephone, a session initiation protocol (Session Initiated Protocol, SIP) telephone, a wireless local loop (Wireless Local Loop, WLL) station, a personal digital assistant (Personal Digital Assistant, PDA) and other devices. The wireless terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present disclosure.

The network device involved in the embodiments of the disclosure may be a base station, which may include multiple cells. Depending on the specific application scenario, the base station may also be called as an access point, a device in the access network that communicates with a wireless terminal device through one or more sectors on the air interface, or it may have other names. The network device may be configured to exchange a received air frame with an Internet protocol (Internet Protocol, IP) packet, worked as a router between the wireless terminal device and the rest of the access network, where the rest of the access network may include an Internet protocol (IP) communication network. The network device may further coordinate an attribute management of an air interface. For example, the network device involved in the embodiments of the present disclosure may be a network device (Base Transceiver Station, BTS) in a global system of mobile communication (GSM) or a code division multiple access (CDMA), a network device (NodeB) in a wideband code division multiple access (WCDMA), an evolutional network device (evolutional Node B, eNB or e-NodeB) in a long term evolution (LTE) system, a 5G base station in a 5G system architecture, a home evolved network device (Home evolved Node B, HeNB), a relay node (relay node), a femtocell (femto), a picocell (pico), etc., which are not limited in the embodiments of the present disclosure. In some network architectures, the network device may include a centralized unit (centralized unit, CU) node and a distributed unit (distributed unit, DU) node, the centralized unit and the distributed unit may also be geographically separated.

The network device and the terminal device may each use one or more antennas for multi input multi output (Multi Input Multi Output, MIMO) transmission, which may be single user MIMO (Single User MIMO, SU-MIMO) or multiple user MIMO (Multiple User MIMO, MU-MIMO). According to the form and the number of antenna combinations, MIMO transmission may be 2D-MIMO, 3D-MIMO, FD-MIMO, or massive-MIMO, as well as diversity transmission, precoding transmission, beamforming transmission, etc.

Hereinafter, a detailed description of the embodiments of the present disclosure will be provided in conjunction with the accompanying drawings. It should be noted that the display order of the embodiments of the present disclosure only represents an order of the embodiments and does not represent the superiority or inferiority of the technical solutions provided by the embodiments.

The 5G communication system has introduced supplementary upLink (Supplementary UpLink, SUL) technology, while also inheriting carrier aggregation (Carrier Aggregation, CA) and dual connectivity (Dual Connectivity, DC) technologies from LTE.

### 1. Regarding SUL

A cell (Cell) generally includes an uplink carrier (uplink carrier) and a downlink carrier (downlink carrier), both of which are in the same frequency band (frequency band). However, in the 5G era, bands (band) and frequency points used are relatively high, such as millimeter wave, and etc. The higher the frequency band, the greater the signal transmission loss. Due to a limited transmission power of a UE, which will result in that an uplink coverage of the UE is limited. Therefore, in 5G, the SUL technology is proposed, which ensures the uplink coverage of the UE by providing a supplementary uplink (usually in a low frequency band, such as an LTE frequency band).

A normal uplink of the UE is called as an UL, and the supplementary uplink is called as an SUL. The SUL adopts a 1.8G frequency band with a low frequency point and minimal signal loss, ensuring the UL coverage.

It should be noted that, DL, UL and SUL belong to the same cell, which is the significant difference between SUL and CA.

The UE may dynamically select a transmission link between the UL and the SUL, however, at a given moment, UE can only choose one of them for transmission and cannot simultaneously perform uplink transmission on both of the uplinks.

### 2. Regarding CA

CA, that is, carrier aggregation, as the name suggests, refers to an aggregation of multiple carriers for transmission.

Since frequency bands allocated to operators may be limited and not necessarily continuous, a speed of a UE will be limited if it can only use one of the frequency bands. In order to solve this problem, the CA technology aggregates spectrum resources from the same or different frequency bands and provides them for use by the UE, thereby improving the speed of the UE.

Assuming an operator has two frequency bands: a Band A and a Band B. The operator may use the CA technology to simultaneously allocate the Band A and the Band B to UE for aggregation use. It should be noted that, during carrier aggregation, each carrier corresponds to a cell. In CA, different cells belong to the same DU.

The difference between the CA and the SUL lies in that:
the SUL only corresponds to the uplink, while in CA, each component carrier (CC) may have both an uplink and a downlink;
the SUL belongs to the same cell, while in CA, different bands belong to different cells.

### 3. Regarding DC

DC, that is, dual-connectivity, as the name suggests, refers to the UE maintaining connections with two base stations simultaneously. At the beginning, the DC technology was designed to address the coverage issues for users at an edge of a cell.

When the UE is at the edge of the cell, if it only relies on a master base station A, a signal strength of the UE may not be sufficient. The operator may deploy a base station B at the edge of the cell and configure the base station A and the base station B as the DC to enhance the coverage. The UE maintains connections with both of the base station A and the base station B.

The difference between the DC and the CA lies in that: in DC, two base stations are independently scheduled, which means that the UE should have two different media access control (Media Access Control, MAC) entities, one corresponding to the base station A and the other corresponding to the base station B; while in CA, all CCs of the same UE correspond to one MAC entity.

In summary, in5G, among CA/DC/SUL of, CA requires multiple CCs to belong to the same DU. Each DU independently schedules resources of cells it manages, without being able to schedule resources across DUs. With further evolution of the network, in order to improve user experience, the network may have multiple network access points simultaneously providing services to the UE. Considering the mobility of the UE, these access points may belong to multiple DUs. When these access points work together to serve the UE, how the network can flexibly coordinate multiple access points with the UE for data transmission is a problem that needs to be solved.

An embodiment of the present disclosure proposes a data transmission method between a network and a terminal. The network configures one or more transmission network elements for a UE based on a location and a requirement of a user, such transmission network elements may be connected to the same distributed unit (Distributed Unit, DU) or different distributed units. Transmission network elements under multiple DUs jointly communicate with the terminal to ensure data transmission and solve a problem of data transmission between the terminal and multiple network nodes. In the embodiments of the present disclosure, the network side allocates a first DU and a second DU to the UE, by adopting a scheduling method across transmission network elements, the first DU schedules transmission network elements under multiple DUs (including the first DU and the second DU), achieving coordinated data transmission between the UE and transmission network elements under multiple DUs (including the first DU and the second DU), thereby improving the business continuity of the terminal, as well as the reliability and throughput of transmission.

Hereinafter, technical solutions provided by embodiments of the present disclosure from different sides will be introduced.

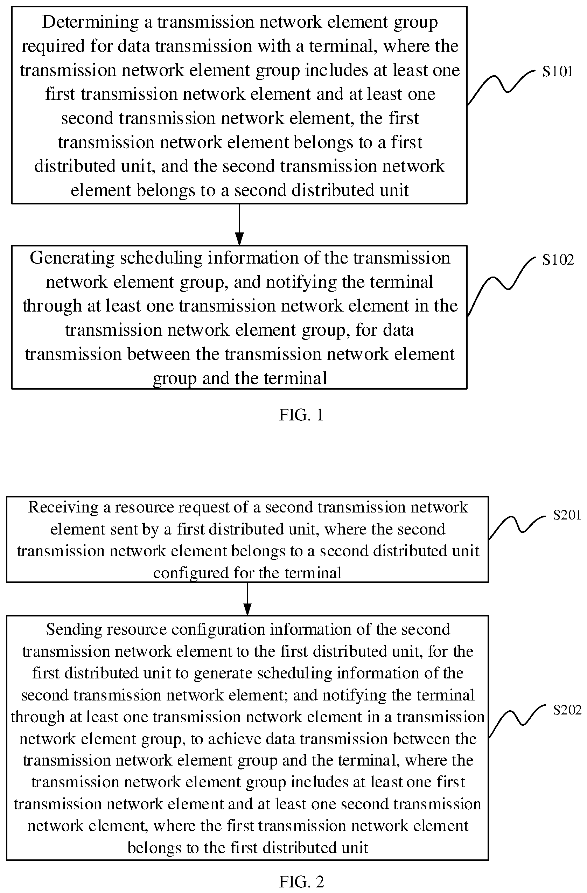

On a first distributed unit side, referring to FIG. 1, an embodiment of the present disclosure provides a data transmission method, including:
S101, determining a transmission network element group required for data transmission with a terminal, where the transmission network element group includes at least one first transmission network element and at least one second transmission network element, the first transmission network element belongs to a first distributed unit, and the second transmission network element belongs to a second distributed unit.

Among them, the transmission network element refers to, for example, an access point (Access Point, AP) and/or a transmission and receiving point (Transmission and Receiving Point, TRP).

That is to say, in the embodiment of the present disclosure, the transmission network element group may include multiple APs and/or TRPs. The first transmission network element may be an AP or a TRP, and similarly, the second transmission network element may be an AP or a TRP. For example, the first transmission network element is an AP, and the second transmission network element is also an AP; or the first transmission network element is an AP, and the second transmission network element is a TRP, etc.

There can be one or more second distributed units configured for the same terminal.

At least one transmission network element in the transmission network element group for the UE belongs to the first distributed unit.

S102, generating scheduling information of the transmission network element group, and notifying the terminal through at least one transmission network element in the transmission network element group, for data transmission between the transmission network element group and the terminal.

Among them, generating the scheduling information of the transmission network element group, that is, generating scheduling information of each transmission network element in the transmission network element group. That is to say, in the embodiment of the present disclosure, the first distributed unit allocated for the UE may generate scheduling information of a respective transmission network element in the transmission network element group for data transmission with the UE, and notify the UE of the scheduling information of respective transmission network elements in the transmission network element group through any one or more of the transmission network elements. By using a scheduling method across transmission network elements, the first distributed unit may schedule transmission network elements under multiple DUs.

For example, physical downlink control channel (Physical Downlink Control Channel, PDCCH) information of all APs in an APG (AP group) is transmitted through an AP belonging to the first distributed unit, that is, scheduling is performed across APs. Alternatively, each AP may send its own PDCCH information; at this time, the first distributed unit notifies the second distributed unit of scheduling information of an AP belonging to the second distributed unit, the scheduling information being generated by the first distributed unit; and the second distributed unit notifies the corresponding AP under the second distributed unit of the scheduling information of the AP belonging to the second distributed unit generated by the first distributed unit, for PDCCH scheduling.

In some implementations, the generating the scheduling information of the transmission network element group includes:
generating, based on resource configuration information of the first transmission network element, scheduling information of the first transmission network element;
   and/or,
acquiring resource configuration information of the second transmission network element from the second distributed unit;
generating, based on the resource configuration information of the second transmission network element, scheduling information of the second transmission network element.

That is to say, in the embodiment of the present disclosure, the first distributed unit performs resource scheduling, and for a resource of a transmission network element belonging to the second distributed unit, the first distributed unit may acquire the resource from the second distributed unit through an interface between DUs.

Among them, the resource configuration information refers to, e.g., information of a dynamic resource, a periodic resource, or a semi-static resource.

Specifically, for example, the resource acquired by the first distributed unit from the second distributed unit through the interface between DUs (i.e., the resource of the transmission network element belonging to the second distributed unit) may be a dynamic resource based on a service quality of service (QoS) or a transmitted data packet, or a periodic or semi-persistent static resource set.

Among them, the resource of the transmission network element may include a physical resource and a radio frequency resource (such as a time-frequency resource, a code-domain resource, a space-domain resource, etc.) of 3G, 4G, 5G, as well as a physical resource and a radio frequency resource defined by a future network.

The scheduling information refers to, e.g., scheduling information of a PUCCH, a PUSCH and the like in an uplink direction; scheduling information of a PDCCH, a PDSCH and the like in a downlink direction.

That is to say, in the embodiment of the present disclosure, the scheduling information (i.e., the scheduling information of the transmission network element group) of at least one channel required for uplink and downlink data transmission between respective transmission network elements (including respective transmission network elements in the transmission network element group of the terminal) and the terminal is uniformly determined by a single distributed unit, so as to achieve data transmission between the respective transmission network elements and the terminal based on these configuration information.

In some embodiments, the method further includes:
notifying the second distributed unit of scheduling information of the second transmission network element.

It should be noted that physical layer configuration may be configured by a CU to a DU and an AP. Therefore, the step of the first distributed unit notifying the second distributed unit of the scheduling information of the second transmission network element is an optional step.

In some implementations, in a downlink direction, the method further includes:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, where the downlink media access control protocol data unit of the second transmission network element is forwarded by the second distributed unit to the second transmission network element, and is sent to the terminal through the second transmission network element.

In some implementations, in an uplink direction, the method further includes:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

That is to say, the network allocates the first distributed unit and the second distributed unit for the UE, with MAC and higher protocol layers located in the first distributed unit, while the second distributed unit is responsible only for physical layer transmission.

The first distributed unit needs to send a physical layer mapping manner and physical channel configuration (including time-frequency occupancy, MCS, and etc.) to the second distributed unit, and needs to deliver a complete MAC protocol fata unit (Protocol Data Unit, PDU) to the second distributed unit through an interface between the first distributed unit and the second distributed unit; the second distributed unit maps MAC PDU(s) to a physical layer transmission stream based on the scheduling of the first distributed unit (downlink), or processes a received physical layer transmission stream (uplink), and returns MAC PDU(s) to the first distributed unit.

It should be noted that the distributed unit described in the embodiments of the present disclosure is a type of network transmission unit, which may be a distributed unit in a new radio (New Radio, NR) system or a user plane node under any network architecture, the distributed unit supports at least MAC layer functionality.

Correspondingly, on a second distributed unit side, referring to FIG. 2, an embodiment of the present disclosure provides a data transmission method, including:
S201, receiving a resource request of a second transmission network element sent by a first distributed unit configured for a terminal, where the second transmission network element belongs to a second distributed unit configured for the terminal;
S202, sending resource configuration information of the second transmission network element to the first distributed unit, for the first distributed unit to generate scheduling information of the second transmission network element; and notifying the terminal through at least one transmission network element in a transmission network element group, to achieve data transmission between the transmission network element group and the terminal, where the transmission network element group includes at least one first transmission network element and at least one second transmission network element, where the first transmission network element belongs to the first distributed unit.

In some embodiments, the method further includes:
receiving the scheduling information of the second transmission network element and/or configuration information of the second transmission network element sent by the first distributed unit.

In some embodiments, the method further includes:
receiving a downlink media access control protocol data unit of the second transmission network element sent by the first distributed unit, and sending the downlink media access control protocol data unit of the second transmission network element to the second transmission network element.

In some embodiments, the method further includes:
receiving an uplink media access control protocol data unit from the terminal sent by the second transmission network element, and sending the uplink media access control protocol data unit to the first distributed unit.

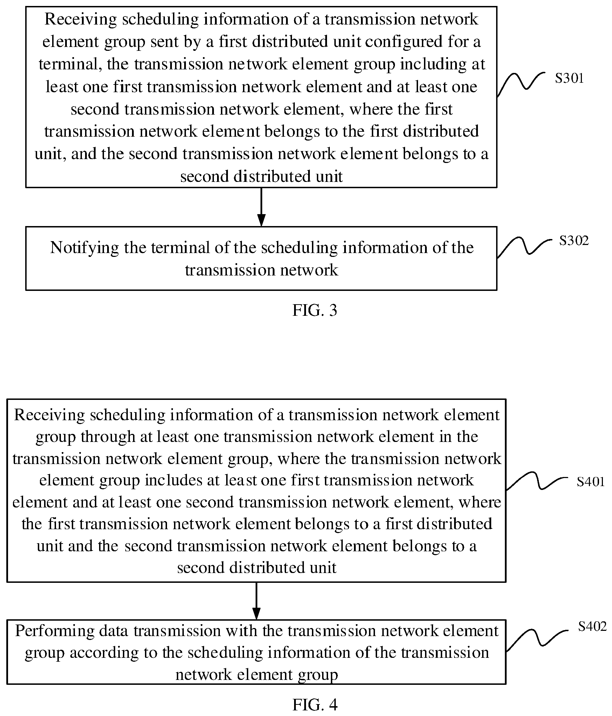

Correspondingly, on a transmission network element side, referring to FIG. 3, an embodiment of the present disclosure provides a data transmission method, including:
S301, receiving scheduling information of a transmission network element group sent by a first distributed unit configured for a terminal, the transmission network element group including at least one first transmission network element and at least one second transmission network element, where the first transmission network element belongs to the first distributed unit, and the second transmission network element belongs to a second distributed unit;
S302, notifying the terminal of the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the method further includes:
performing data transmission with the terminal based on scheduling information of a local transmission network element.

Correspondingly, on a terminal side, referring to FIG. 4, an embodiment of the present disclosure provides a data transmission method, including:
S401, receiving scheduling information of a transmission network element group through at least one transmission network element in the transmission network element group, where the transmission network element group includes at least one first transmission network element and at least one second transmission network element, where the first transmission network element belongs to a first distributed unit and the second transmission network element belongs to a second distributed unit.

That is to say, in the embodiment of the present disclosure, the UE may receive scheduling information of multiple transmission network elements from a single transmission network element, and perform, based on the received scheduling information, data reception and/or transmission over the corresponding resource with the transmission network element corresponding to the scheduling resource. Among them, the aforementioned multiple transmission network elements may belong to different DUs.

S402, performing data transmission with the transmission network element group according to the scheduling information of the transmission network element group.

It should be noted that the first distributed unit described in the embodiments of the present disclosure may also be referred to as a master distributed unit (i.e., master DU); the second distributed unit described in the embodiments of the present disclosure may also be referred to as a secondary distributed unit (i.e., secondary DU).

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the performing data transmission with the transmission network element group according to the scheduling information of the transmission network element group includes:
for any transmission network element, performing data transmission with the transmission network element in the transmission network element group according to scheduling information of the transmission network element.

Examples of several specific embodiments are provided below.

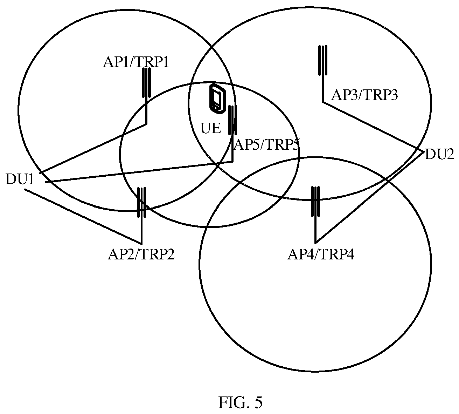

Embodiment 1: an AP belonging to a master DU sends scheduling information. The application scenario is shown in FIG. 5. This embodiment involves downlink data transmission.

An APG of a UE includes an AP1, an AP3, and an AP5, with a master DU of the UE being a DU1 and a secondary DU of the UE being a DU2. Among them, the AP1, an AP2, and the AP5 belong to the DU1, while the AP3 and an AP4 belong to the DU2.

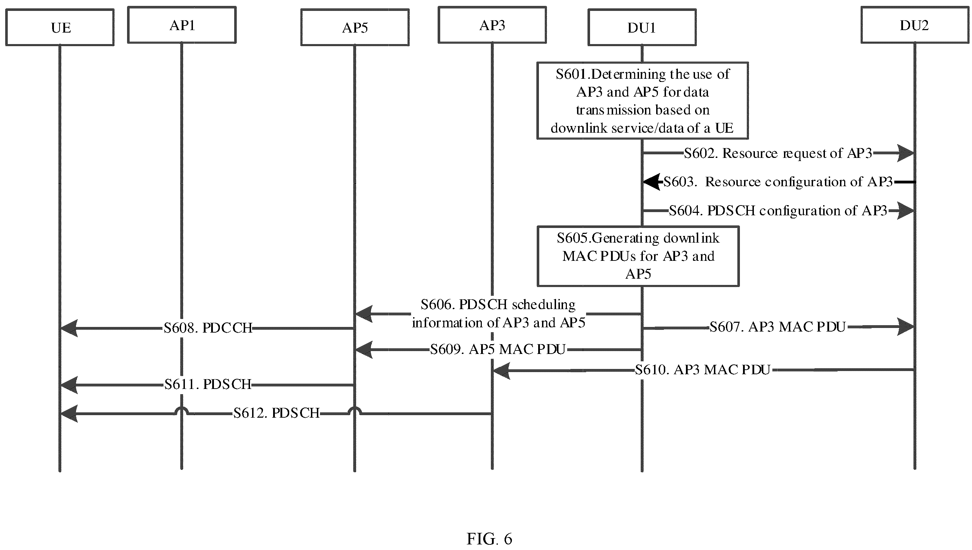

Referring to FIG. 6, a method of this embodiment includes the following steps.

Step S601: the master DU1 selects, based on data in a cache and/or a downlink service QoS of a UE, the AP3 and the AP5 to send downlink data to the UE.

Step S602: the master DU1 requests the secondary DU2 for a downlink resource of the AP3, where a request message may carry at least one of: an identifier of the AP3, QoS of the UE, a packet size, a size of the resource of the AP3, a scheduling time of the AP3, a scheduling cycle of the AP3, or an offset.

The data packet may be any data packet, including a data packet on a control plane, a user plane, an intelligent plane, etc.

The offset is an offset within one cycle, for example, if the cycle is 100ms and the offset is 10ms, then it means the 10^{th} ms within each 100ms.

Step S603: the secondary DU2 allocates a dynamic resource, a periodic resource, or a semi-static resource of the AP3 for the master DU1 based on the request from the master DU1.

The dynamic resource refers to a resource scheduled for each request, the periodic resource refers to a certain resource fixedly allocated within each cycle, and the semi-static resource refers to a configured periodic resource that may be activated or deactivated.

Step S604: the master DU1 sends physical downlink share channel (Physical Downlink Share Channel, PDSCH) configuration of the AP3 to the secondary DU2.

This step is optional, and the physical layer configuration may be configured by a CU for a DU and an AP.

Step S605: the master DU1 generates MAC PDUs for the AP3 and the AP5.

Step S606: the master DU1 generates PDSCH scheduling information of the AP3 and the AP5 based on a preset scheduling algorithm, and sends the PDSCH scheduling information of the AP3 and the PDSCH scheduling information of the AP5 to the AP5.

Step S607: the master DU1 sends the MAC PDU of the AP3 to the secondary DU2 to which the AP3 belongs. The master DU1 may send PDSCH configuration information of the AP3 to the secondary DU2 before or at the same time as step S606, enabling the DU2 to timely receive the PDSCH configuration information of the AP3.

Step S608: the AP5 sends a PDCCH to the UE, the PDCCH includes the PDSCH scheduling information of the AP3 and the PDSCH scheduling information of the AP5.

Step S609: the master DU1 sends the MAC PDU of the AP5 to the AP5.

Step S610: the secondary DU2 sends the MAC PDU of the AP3 to the AP3.

Step S611: the AP5 sends a downlink data packet to the UE through a PDSCH.

Step S612: the AP3 sends a downlink data packet to the UE through a PDSCH.

It should be noted that there is no timing restriction between the scheduling and data transmission of the AP3 and the AP5 in the above steps, and they can be performed simultaneously or at different times.

Embodiment 2: an AP belonging to a master DU sends scheduling information, and the application scenario is also shown in FIG. 5. This embodiment involves uplink data transmission.

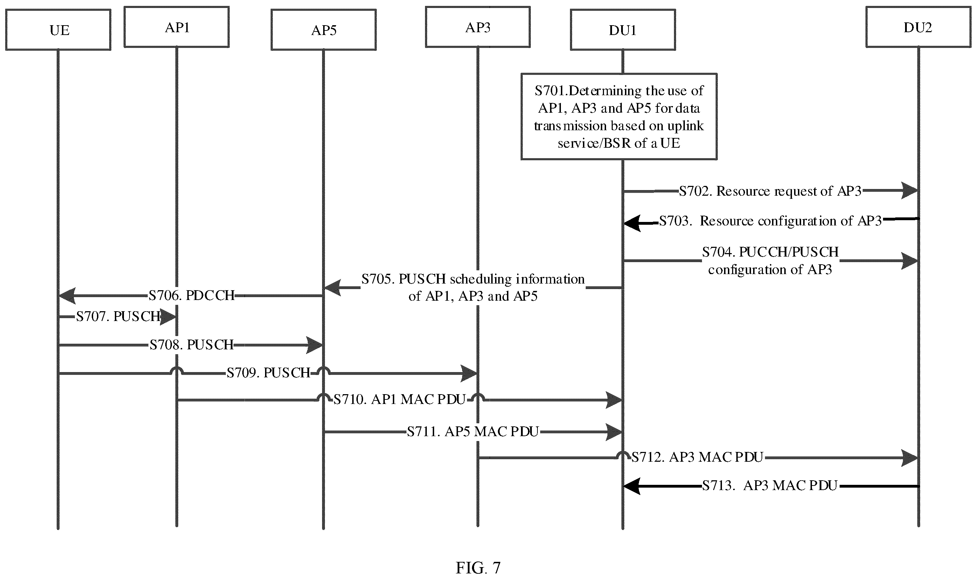

Referring to FIG. 7, a method of this embodiment includes the following steps.

Step S701: the master DU1 selects, based on a buffer status report (Buffer Status Report, BSR) and/or an uplink service QoS of a UE, the AP1, the AP3 and the AP5 to receive uplink data sent by the UE.

Step S702: the master DU1 requests the secondary DU2 for an uplink resource of the AP3, where a request message may carry at least one of: an identifier of the AP3, QoS of the UE, a packet size, a size of the resource of the AP3, a scheduling time of the AP3, a scheduling cycle of the AP3, or an offset.

Step S703: the secondary DU2 allocates a dynamic resource, a periodic resource, or a semi-static resource of the AP3 for the master DU1 based on the request from the DU1.

Step S704: the master DU1 sends physical uplink control channel (Physical Uplink Control Channel, PUCCH) configuration and/or physical uplink share channel (Physical Uplink Share Channel, PUSCH) configuration of the AP3 to the secondary DU2.

This step is optional, and the physical layer configuration may be configured by a CU for a DU and an AP.

Step S705: the master DU1 generates scheduling information of the AP1, the AP3, and the AP5 based on a scheduling algorithm, and sends the scheduling information of the AP1, the scheduling information of the AP3, and the scheduling information of the AP5 to the AP5.

Step S706: the AP5 sends a PDCCH to the UE, the PDCCH includes PUSCH scheduling information of the AP1, PUSCH scheduling information of the AP3, and PUSCH scheduling information of the AP5.

Step S707: the AP1 receives uplink data of the UE on a scheduled PUSCH.

Step S708: the AP5 receives uplink data of the UE on a scheduled PUSCH.

Step S709: the AP3 receives uplink data of the UE on a scheduled PUSCH.

Step S710: the AP1 sends an uplink data packet of the UE to the master DU1.

Step S711: the AP5 sends an uplink data packet of the UE to the master DU1.

Step S712: the AP3 sends an uplink data packet of the UE to the secondary DU2.

Step S713: the secondary DU2 sends the uplink data packet of the UE to the master DU1.

It should be noted that there is no timing restriction among the scheduling and data transmission of the AP1, the AP3 and the AP5 in the above steps, and they can be performed simultaneously or at different times.

Embodiment 3: each AP sends its own physical channel scheduling information, and the application scenario is also shown in FIG. 5. This embodiment involves downlink data transmission.

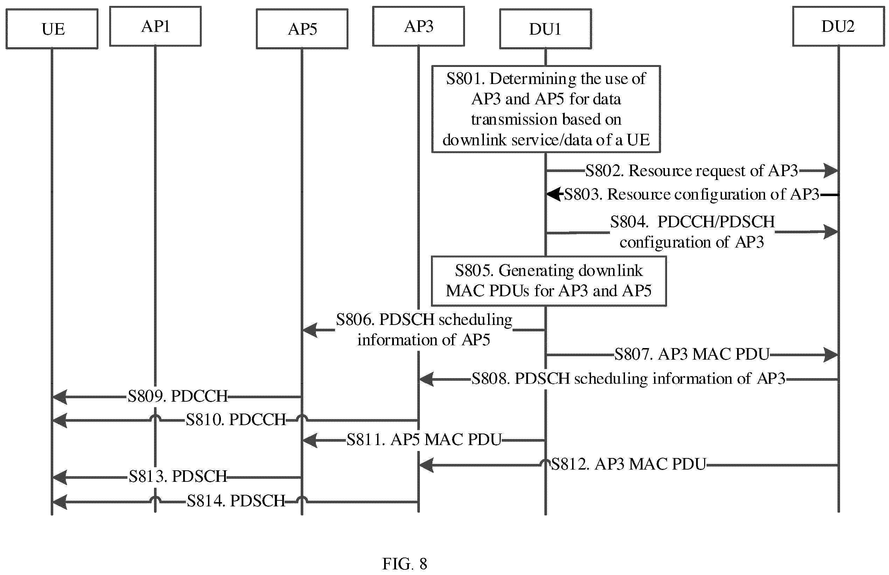

Referring to FIG. 8, a method of this embodiment includes the following steps.

Step S801: the master DU1 selects, based on data in a cache and/or a downlink service QoS of a UE, the AP3 and the AP5 to send downlink data to the UE.

Step S802: the master DU1 requests the secondary DU2 for a downlink resource of the AP3, where a request message may carry at least one of: an identifier of the AP3, QoS of the UE, a packet size, a size of the resource of the AP3, a scheduling time of the AP3, a scheduling cycle of the AP3, or an offset.

Step S803: the secondary DU2 allocates a dynamic resource, a periodic resource, or a semi-static resource of the AP3 for the master DU1 based on the request from the DU1.

Step S804: the master DU1 sends PDSCH configuration of the AP3 to the secondary DU2.

This step is optional, and the physical layer configuration may be configured by a CU for a DU and an AP.

Step S805: the master DU1 generates MAC PDUs for the AP3 and the AP5.

Step S806: the master DU1 generates scheduling information of the AP5 (i.e., PDSCH scheduling information of the AP5) based on a scheduling algorithm, and sends the scheduling information of the AP5 to the AP5.

Step S807: the master DU1 sends the MAC PDU of the AP3 to the secondary DU2 to which the AP3 belongs. The master DU1 may send PDSCH configuration information of the AP3 to the secondary DU2 before or at the same time as step S806.

Step S808: the secondary DU2 generates scheduling information of the AP3 (i.e., PDSCH scheduling information of the AP3) based on a scheduling algorithm and an MAC CE of the AP3, and sends the scheduling information of the AP3 to the AP3.

Step S809: the AP5 sends a PDCCH to the UE, the PDCCH includes the PDSCH scheduling information of the AP5.

Step S810: the AP3 sends a PDCCH to the UE, the PDCCH includes the PDSCH scheduling information of the AP3.

Step S811: the master DU1 sends the MAC PDU of the AP5 to the AP5.

Step S812: the secondary DU2 sends the MAC PDU of the AP3 to the AP3.

Step S813: the AP5 sends a downlink data packet to the UE through a PDSCH.

Step S814: the AP3 sends a downlink data packet to the UE through a PDSCH.

It should be noted that there is no timing restriction between the scheduling and data transmission of the AP3 and the AP5 in the above steps, and they can be performed simultaneously or at different times.

Embodiment 4: each AP sends its own physical channel scheduling information, and the application scenario is also shown in FIG. 5. This embodiment involves downlink data transmission.

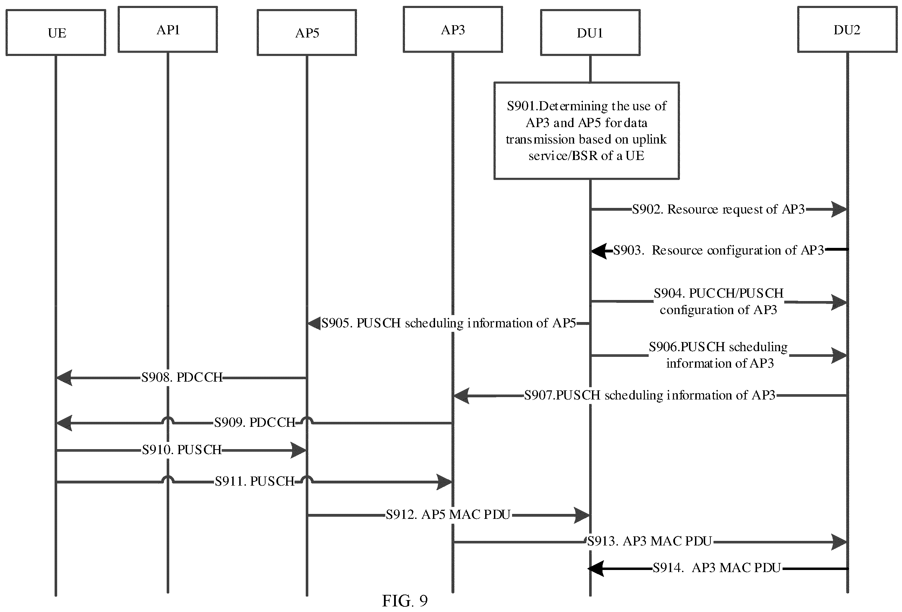

Referring to FIG. 9, a method of this embodiment includes the following steps.

Step S901: the master DU1 selects, based on a BSR and/or an uplink service QoS of a UE, the AP3 and the AP5 to receive uplink data sent by the UE.

Step S902: the master DU1 requests the secondary DU2 for an uplink resource of the AP3, where a request message may carry at least one of: an identifier of the AP3, QoS of the UE, a packet size, a size of the resource, a scheduling time, a scheduling cycle, or an offset.

Step S903: the secondary DU2 allocates a dynamic resource, a periodic resource, or a semi-static resource of the AP3 for the master DU1 based on the request from the DU1.

Step S904: the master DU1 sends PUCCH configuration and/or PUSCH configuration of the AP3 to the secondary DU2.

This step is optional, and the physical layer configuration may be configured by a CU for a DU and an AP.

Step S905: the master DU1 generates scheduling information of the AP5 (i.e., the PUSCH scheduling information of the AP5) based on a scheduling algorithm, and sends the scheduling information of the AP5 to the AP5.

Step S906: the master DU1 generates scheduling information of the AP3 (i.e., the PUSCH scheduling information of the AP3) based on a scheduling algorithm, and sends the scheduling information of the AP3 to the secondary DU2.

Step S907: the secondary DU2 sends the scheduling information of the AP3 to the AP3.

Step S908: the AP5 sends a PDCCH to the UE, the PDCCH includes the PUSCH scheduling information of the AP5.

Step S909: the AP3 sends a PDCCH to the UE, the PDCCH includes the PUSCH scheduling information of the AP3.

Step S910: the AP5 receives uplink data of the UE on a scheduled PUSCH.

Step S911: the AP3 receives uplink data of the UE on a scheduled PUSCH.

Step S912: the AP5 sends an uplink data packet of the UE (a MAC PDU of the AP5) to the master DU1.

Step S913: the AP3 sends an uplink data packet of the UE (a MAC PDU of the AP3) to the secondary DU2.

Step S914: the secondary DU2 sends the uplink data packet of the UE (the MAC PDU of the AP3) to the master DU1.

It should be noted that there is no timing restriction between the scheduling and data transmission of the AP3 and the AP5 in the above steps, and they can be performed simultaneously or at different times.

Based on the same invention concept, in the following, a device or an apparatus provided by an embodiment of the present disclosure is introduced, and explanations or examples of the same or corresponding technical features as those described in the above methods will not be repeated below.

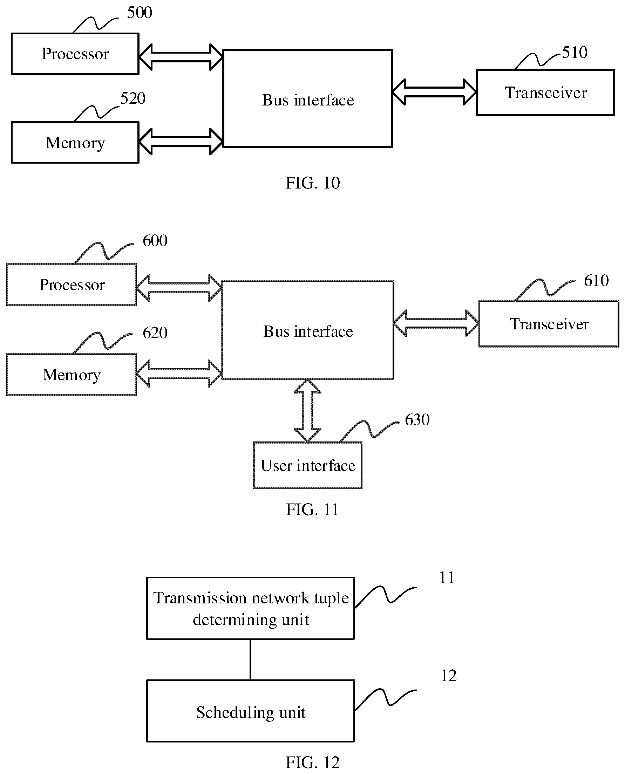

On the network side, referring to FIG. 10, a data transmission apparatus provided in an embodiment of the present disclosure includes a memory 520, a transceiver 510, a processor 500, and etc. Among them:
when a data transmission apparatus on the network side is used as the aforementioned data transmission apparatus on the first distributed unit side, the processor 500 is configured to read a program from the memory 520 and perform following operations:
determining a transmission network element group required for data transmission with a terminal, where the transmission network element group includes at least one first transmission network element and at least one second transmission network element, the first transmission network element belongs to a first distributed unit, and the second transmission network element belongs to a second distributed unit;
generating scheduling information of the transmission network element group, and notifying the terminal through at least one transmission network element in the transmission network element group, for data transmission between the transmission network element group and the terminal.

In some implementations, the generating the scheduling information of the transmission network element group includes:
generating, based on resource configuration information of the first transmission network element, scheduling information of the first transmission network element;
   and/or,
acquiring resource configuration information of the second transmission network element from the second distributed unit;
generating, based on the resource configuration information of the second transmission network element, scheduling information of the second transmission network element.

In some implementations, the processor is further configured to read the computer program from the memory and perform following operations:
notifying the second distributed unit of scheduling information of the second transmission network element.

In some implementations, the processor 500 is further configured to read the computer program from the memory 520 and perform following operations:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, where the downlink media access control protocol data unit of the second transmission network element is forwarded by the second distributed unit to the second transmission network element, and is sent to the terminal through the second transmission network element.

In some implementations, the processor 500 is further configured to read the computer program from the memory 520 and perform following operations:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

When a data transmission apparatus on the network side is used as the aforementioned data transmission apparatus on the second distributed unit side, the processor 500 is configured to read a program from the memory 520 and perform following operations:
receiving a resource request of a second transmission network element sent by a first distributed unit configured for a terminal, where the second transmission network element belongs to a second distributed unit configured for the terminal;
sending resource configuration information of the second transmission network element to the first distributed unit, for the first distributed unit to generate scheduling information of the second transmission network element; and notifying the terminal through at least one transmission network element in a transmission network element group, for data transmission between the transmission network element group and the terminal, where the transmission network element group includes at least one first transmission network element and at least one second transmission network element, where the first transmission network element belongs to the first distributed unit.

In some implementations, the processor 500 is further configured to read the computer program from the memory 520 and perform following operations:
receiving the scheduling information of the second transmission network element and/or configuration information of the second transmission network element sent by the first distributed unit.

In some implementations, the processor 500 is further configured to read the computer program from the memory 520 and perform following operations:
receiving a downlink media access control protocol data unit of the second transmission network element sent by the first distributed unit, and sending the downlink media access control protocol data unit of the second transmission network element to the second transmission network element.

In some implementations, the processor 500 is further configured to read the computer program from the memory 520 and perform following operations:
receiving an uplink media access control protocol data unit from the terminal sent by the second transmission network element, and sending the uplink media access control protocol data unit to the first distributed unit.

When a data transmission apparatus on the network side is used as the aforementioned data transmission apparatus on any of the above access unit sides, the processor 500 is configured to read a program from the memory 520 and perform following operations:
receiving scheduling information of a transmission network element group sent by a first distributed unit configured for a terminal, the transmission network element group including at least one first transmission network element and at least one second transmission network element, where the first transmission network element belongs to the first distributed unit, and the second transmission network element belongs to a second distributed unit;
notifying the terminal of the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the processor 500 is further configured to read the computer program from the memory 520 and perform following operations:
performing data transmission with the terminal based on scheduling information of a local transmission network element.

The transceiver 510 is configured to transmit and receive data under control of the processor 500.

Among them, in FIG. 10, a bus architecture may include any number of interconnected buses and bridges. Specifically, various circuits of one or more processors represented by the processor 500 and a memory represented by the memory 520 are linked together. The bus architecture may also link various other circuits together, such as, a peripheral device, a voltage regulator and a power management circuit, which are well known in the art and will not be further described herein. The bus interface provides interfaces. The transceiver 510 may be a plurality of elements, including a transmitter and a receiver, providing a unit for communicating with various other devices via a transmission medium which includes a wireless channel, a wired channel, an optical cable or other transmission medium. The processor 500 is responsible for managing the bus architecture and general processing, and the memory 520 may store data used by the processor 500 when performing an operation.

The processor 500 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also adopt a multi-core architecture.

On the terminal side, referring to FIG. 11, an embodiment of the present disclosure provides a data transmission apparatus which includes:
a processor 600, configured to read a program from a memory 620 and perform following operations:
receiving scheduling information of a transmission network element group through at least one transmission network element in the transmission network element group, where the transmission network element group includes at least one first transmission network element and at least one second transmission network element, where the first transmission network element belongs to a first distributed unit and the second transmission network element belongs to a second distributed unit;
performing data transmission with the transmission network element group according to the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the performing data transmission with the transmission network element group according to the scheduling information of the transmission network element group includes:
for any transmission network element, performing data transmission with the transmission network element in the transmission network element group according to scheduling information of the transmission network element.

The transceiver 610 is used to transmit and receive data under control of the processor 600.

Among them, in FIG. 11, a bus architecture may include any number of interconnected buses and bridges. Specifically, various circuits of one or more processors represented by the processor 600 and a memory represented by the memory 620 are linked together. The bus architecture may also link various other circuits together, such as, a peripheral device, a voltage regulator and a power management circuit, which are well known in the art and will not be further described herein. The bus interface provides interfaces. The transceiver 610 may be a plurality of elements, including a transmitter and a receiver, providing a unit for communicating with various other devices via a transmission medium which includes a wireless channel, a wired channel, an optical cable or other transmission medium. For different user devices, a user interface 630 may also serve as an interface for connecting external or internal devices as needed, including but not limited to a keyboard, a display, a speaker, a microphone, joysticks, and etc.

The processor 600 is responsible for managing the bus architecture and general processing, and the memory 620 may store data used by the processor 600 when performing an operation.

In some implementations, the processor 600 may be a CPU (central processor), an ASIC (Application Specific Integrated Circuit, application specific integrated circuit), an FPGA (Field-Programmable Gate Array, field-programmable gate array), or a CPLD (Complex Programmable Logic Device, complex programmable logic device), and the processor may also adopt a multi-core architecture.

The processor uses the computer program stored in the memory to execute any of the methods provided in the embodiments of the present disclosure according to the obtained executable instructions. The processor and the memory may also be arranged separately in physical.

It should be noted that the above-mentioned apparatus provided in the embodiments of the present disclosure may carry out all the method steps implemented in the above-mentioned method embodiments, and may achieve the same technical effects. Therefore, specific descriptions of parts and beneficial effects similar as the method embodiments in this embodiment will not be repeated here.

Referring to FIG. 12, on a first distributed unit side, another data transmission apparatus provided in an embodiment of the present disclosure includes:
a transmission network element group determining unit 11, configured to determine a transmission network element group required for data transmission with a terminal, where the transmission network element group includes at least one first transmission network element and at least one second transmission network element, the first transmission network element belongs to a first distributed unit, and the second transmission network element belongs to a second distributed unit;
a scheduling unit 12, configured to generate scheduling information of the transmission network element group, and notify the terminal through at least one transmission network element in the transmission network element group, for data transmission between the transmission network element group and the terminal.

In some implementations, the generating the scheduling information of the transmission network element group includes:
generating, based on resource configuration information of the first transmission network element, scheduling information of the first transmission network element;
   and/or,
acquiring resource configuration information of the second transmission network element from the second distributed unit;
generating, based on the resource configuration information of the second transmission network element, scheduling information of the second transmission network element.

In some implementations, the scheduling unit 12 is further configured to:
notify the second distributed unit of scheduling information of the second transmission network element.

In some implementations, the scheduling unit 12 is further configured to:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, where the downlink media access control protocol data unit of the second transmission network element is forwarded by the second distributed unit to the second transmission network element, and is sent to the terminal through the second transmission network element.

In some implementations, the scheduling unit 12 is further configured to:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

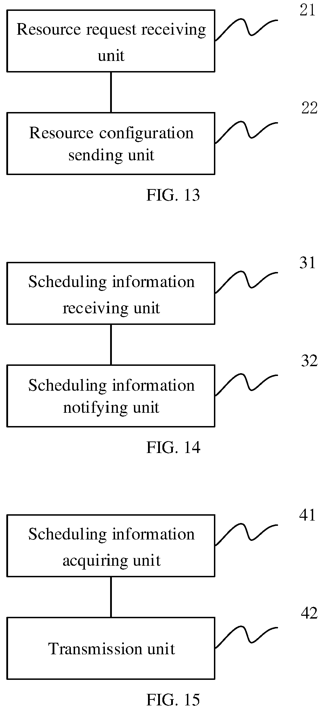

Referring to FIG. 13, on a second distributed unit side, another data transmission apparatus provided by an embodiment of the present disclosure includes:
a resource request receiving unit 21, configured to receive a resource request of a second transmission network element sent by the first distributed unit configured for a terminal, where the second transmission network element belongs to a second distributed unit configured for the terminal;
a resource configuration sending unit 22, configured to send resource configuration information of the second transmission network element to the first distributed unit, for the first distributed unit to generate scheduling information of the second transmission network element; and notify the terminal through at least one transmission network element in a transmission network element group, for data transmission between the transmission network element group and the terminal, where the transmission network element group includes at least one first transmission network element and at least one second transmission network element, where the first transmission network element belongs to the first distributed unit.

In some implementations, the resource request receiving unit 21 is further configured to:
receive the scheduling information of the second transmission network element and/or configuration information of the second transmission network element sent by the first distributed unit.

In some implementations, the resource configuration sending unit 22 is further configured to:
receive a downlink media access control protocol data unit of the second transmission network element sent by the first distributed unit, and sending the downlink media access control protocol data unit of the second transmission network element to the second transmission network element.

In some implementations, the resource configuration sending unit 22 is further configured to:
receive an uplink media access control protocol data unit from the terminal sent by the second transmission network element, and sending the uplink media access control protocol data unit to the first distributed unit.

It should be noted that the data transmission apparatus on the network side in the embodiments of the present disclosure may simultaneously have functional modules of the data transmission apparatus on the first distributed unit side and the data transmission apparatus on the second distributed unit side.

Referring to FIG. 14, on a transmission network element side, another data transmission apparatus provided by an embodiment of the present disclosure includes:
a scheduling information receiving unit 31, configured to receive scheduling information of a transmission network element group sent by a first distributed unit configured for the terminal, the transmission network element group including at least one first transmission network element and at least one second transmission network element, where the first transmission network element belongs to the first distributed unit, and the second transmission network element belongs to a second distributed unit;
a scheduling information notifying unit 32, configured to notify the terminal of the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the scheduling information notifying unit 32 is further configured to read a computer program from a memory and perform following operations:
performing data transmission with the terminal based on scheduling information of a local transmission network element.

Referring to FIG. 15, on a terminal side, another data transmission apparatus provided by an embodiment of the present disclosure includes:
a scheduling information acquiring unit 41, configured to receive scheduling information of a transmission network element group through at least one transmission network element in the transmission network element group, where the transmission network element group includes at least one first transmission network element and at least one second transmission network element, where the first transmission network element belongs to a first distributed unit and the second transmission network element belongs to a second distributed unit;
a transmission unit 42, configured to perform data transmission with the transmission network element group according to the scheduling information of the transmission network element group.

In some implementations, the scheduling information of the transmission network element group includes scheduling information of each transmission network element in the transmission network element group;
the scheduling information of each transmission network element includes scheduling information of at least one of the following channels:
a PUCCH, a PUSCH, a PDCCH, a PDSCH.

In some implementations, the performing data transmission with the transmission network element group according to the scheduling information of the transmission network element group includes:
for any transmission network element, performing data transmission with the transmission network element in the transmission network element group according to scheduling information of the transmission network element.

It should be noted that the division of units in the above embodiments of the present disclosure is illustrative, and it is only a logical function division, there may be other division manners in actual implementations. In addition, each functional unit in each embodiment of the present disclosure may be integrated in one processing unit, or may exist physically alone, or two or more units may be integrated in one unit. The above integrated unit may be implemented in a form of hardware or a software functional unit.

If the integrated unit is implemented in the form of a software functional unit and sold or used as an independent product, it may be stored in a computer-readable storage medium. Based on this understanding, in the technical solution of the present disclosure, the essence or the part that contributes to the prior art or all or part of the technical solution may be embodied in the form of a software product, and the computer software product is stored in a storage medium and includes several instructions to cause a computer device (which may be a personal computer, a server, or a network device, etc.) or a processor (processor) to perform all or a part of the steps of the methods described in the embodiments of the present disclosure. The aforementioned storage medium includes various mediums that can store program codes such as a USB flash disk, a mobile hard disk, a read-only memory (Read-only Memory, ROM), a random access memory (Random Access Memory, RAM), a magnetic disk or an optical disk.

It should be noted that the above-mentioned apparatus provided in the embodiments of the present disclosure may carry out all the method steps implemented in the above-mentioned method embodiments, and may achieve the same technical effects. Therefore, specific descriptions of parts and beneficial effects similar as the method embodiments in this embodiment will not be repeated here.

An embodiment of the present disclosure provides a non-transitory computer-readable storage medium, which stores a computer program for enabling a processor to execute any of the methods provided in the embodiments of the present disclosure.

The non-transitory computer-readable storage medium may be any available medium or data storage device that a processor can access, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state drive (SSD), etc.).

An embodiment of the present disclosure also provides a computer program product or a computer program, the computer program product or the computer program includes computer instructions stored in a computer-readable storage medium. A processor of a computer device reads the computer instructions from the computer-readable storage medium, and executes the computer instructions, to enable the computer device to perform any of the methods described in the above embodiments. The program product may adopt any combination of one or more readable medium. The readable medium may be a readable signal medium or a readable storage medium. The readable storage may be, for example but not limited to, an electricity, magnetism, light, electromagnetism, infrared, or semiconductor system, device, or element, or any combination thereof. More specific examples of the readable storage medium (non-exhaustive list) include: an electrical connection with one or more wires, a portable disk, a hard drive, a random access memory (RAM), a read-only memory (ROM), an erasable programmable read-only memory (EPROM or flash memory), a fiber optic, a portable compact disk read-only memory (CD-ROM), an optical storage device, a magnetic storage device, or any suitable combination thereof.

It should be understood that:
an access technology through which entities in a communication network transmit traffic may be any suitable current or future technology, such as, WLAN (wireless local access network), WiMAX (worldwide interoperability for microwave access), LTE, LTE-A, 5G, Bluetooth, infrared, and etc. In addition, the embodiments may also apply wired technology, for example, an IP-based access technology, such as a wired network or a fixed line.

The embodiments that are suitable for implementation as software code or a part thereof and run using processors or processing functions are independent of software code and may be specified using any known or future developed programming language, such as, a high-level programming language (for example, objective-C, C, C++, C#, Java, Python, Javascript, or other scripting languages), or a low-level programming language (for example, a machine language or an assembly program).

The implementation of the embodiments is independent form a hardware and may be achieved using any known or future developed hardware technology or any mixture thereof, such as a microprocessor or a CPU (central processing unit), an MOS (metal oxide semiconductor), a CMOS (complementary MOS), a BiMOS (bipolar MOS), a BiCMOS (bipolar CMOS), an ECL (emitter coupled logic), and/or a TTL (transistor-transistor logic).

The embodiments may be implemented as an individual device, apparatus, unit, component or function, or in a distributed manner. For example, one or more processors or processing functions may be used or shared in processing, or one or more processing segments or processing parts may be used and shared in processing, where one or more physical processors may be used to implement one or more processing parts dedicated to specific processing as described.

The apparatus may be implemented in a semiconductor chip, a chipset, or a (hardware) module that include such chip or chipset.

The embodiments may also be implemented as any combination of a hardware and a software, such as, an ASIC (application specific IC) component, an FPGA (field-programmable gate array) or a CPLD (complex programmable logic device) component, or a DSP (digital signal processor) component.

The embodiments may also be implemented as a computer program product, including a computer usable medium carrying computer-readable program codes adapted to perform the processes described in the embodiments, where the computer usable medium may be a non-transitory medium.

Those skilled in the art should understand that the embodiments of the present disclosure may be provided as a method, a system, or a computer program product. Therefore, the present disclosure may take the form of a complete hardware embodiment, a complete software embodiment, or an embodiment combining software and hardware aspects. Moreover, the present disclosure may take the form of a computer program product implemented on one or more computer-usable storage mediums (including but not limited to a magnetic disk memory and an optical memory, etc.) including computer usable program codes.

The present disclosure is described with reference to the flowcharts and/or the block diagrams of the methods, the devices (systems), and the computer program product according to the embodiments of the present disclosure. It should be understood that each flow and/or block in the flowcharts and/or block diagrams and the combination of a flow and/or a block in the flowcharts and/or the block diagrams can be implemented by computer program instructions. These computer program instructions can be provided to a general-purpose computer, a special-purpose computer, an embedded processor or a processor of other programmable data processing device to generate a machine, so that the instructions executed by the computer or the processor of other programmable data processing device produce an apparatus for implementing the functions specified in one or more flows of the flowcharts and/or one or more blocks of the block diagrams.

These computer program instructions may also be stored in the computer-readable memory that can guide the computer or other programmable data processing device to work in a specific way, so that the instructions stored in the computer-readable memory produce a manufactured product including an instruction apparatus, and the instruction apparatus implements the functions specified in one or more flows of the flowcharts and/or one or more blocks of the block diagrams.

These computer program instructions may also be loaded on a computer or other programmable data processing device, so that a series of operation steps are performed on the computer or other programmable device to produce a computer-implemented process, so that the instructions executed on the computer or other programmable device provide steps for implementing the functions specified in one or more flows of the flowcharts and/or one or more blocks of the block diagrams.

Apparently, the persons skilled in the art can make various modifications and variations to the present disclosure without departing from the spirit and scope of the present disclosure. Thus, if these modifications and variations of the present disclosure are within the scope of the claims of the present disclosure and the equivalent technologies thereof, the present disclosure is intended to include these modifications and variations.

## Claims

1. A data transmission method, **characterized in that** the method comprises:
determining a transmission network element group required for data transmission with a terminal, wherein the transmission network element group comprises at least one first transmission network element and at least one second transmission network element, the first transmission network element belongs to a first distributed unit, and the second transmission network element belongs to a second distributed unit;
generating scheduling information of the transmission network element group, and notifying the terminal through at least one transmission network element in the transmission network element group, for data transmission between the transmission network element group and the terminal.

2. The method according to claim 1, wherein generating the scheduling information of the transmission network element group comprises:
generating, based on resource configuration information of the first transmission network element, scheduling information of the first transmission network element;
and/or,
acquiring resource configuration information of the second transmission network element from the second distributed unit;
generating, based on the resource configuration information of the second transmission network element, scheduling information of the second transmission network element.

3. The method according to claim 1, further comprising:
notifying the second distributed unit of scheduling information of the second transmission network element.

4. The method according to claim 1, further comprising:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, wherein the downlink media access control protocol data unit of the second transmission network element is forwarded by the second distributed unit to the second transmission network element, and is sent to the terminal through the second transmission network element.

5. The method according to claim 1, further comprising:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

6. A data transmission method, **characterized in that** the method comprises:
receiving a resource request of a second transmission network element sent by a first distributed unit configured for a terminal, wherein the second transmission network element belongs to a second distributed unit configured for the terminal;
sending resource configuration information of the second transmission network element to the first distributed unit, for the first distributed unit to generate scheduling information of the second transmission network element; and notifying the terminal through at least one transmission network element in the transmission network element group, for data transmission between the transmission network element group and the terminal, wherein the transmission network element group comprises at least one first transmission network element and at least one second transmission network element, wherein the first transmission network element belongs to the first distributed unit.

7. The method according to claim 6, further comprising:
receiving the scheduling information of the second transmission network element and/or configuration information of the second transmission network element sent by the first distributed unit.

8. The method according to claim 6, further comprises:
receiving a downlink media access control protocol data unit of the second transmission network element sent by the first distributed unit, and sending the downlink media access control protocol data unit of the second transmission network element to the second transmission network element.

9. The method according to claim 6, further comprising:
receiving an uplink media access control protocol data unit from the terminal sent by the second transmission network element, and sending the uplink media access control protocol data unit to the first distributed unit.

10. A data transmission method, **characterized in that** the method comprises:
receiving scheduling information of a transmission network element group sent by a first distributed unit configured for a terminal, the transmission network element group comprising at least one first transmission network element and at least one second transmission network element, wherein the first transmission network element belongs to the first distributed unit, and the second transmission network element belongs to a second distributed unit;
notifying the terminal of the scheduling information of the transmission network element group.

11. The method according to claim 10, wherein the scheduling information of the transmission network element group comprises scheduling information of each transmission network element in the transmission network element group;
the scheduling information of each transmission network element comprises scheduling information of at least one of the following channels:
a PUCCH, a PUSCH, a PDCCH, a PDSCH.

12. The method according to claim 10, further comprising:
performing data transmission with the terminal based on scheduling information of a local transmission network element.

13. A data transmission method, **characterized in that** the method comprises:
receiving scheduling information of a transmission network element group through at least one transmission network element in the transmission network element group, wherein the transmission network element group comprises at least one first transmission network element and at least one second transmission network element, wherein the first transmission network element belongs to a first distributed unit and the second transmission network element belongs to a second distributed unit;
performing data transmission with the transmission network element group according to the scheduling information of the transmission network element group.

14. The method according to claim 13, wherein the scheduling information of the transmission network element group comprises scheduling information of each transmission network element in the transmission network element group;
the scheduling information of each transmission network element comprises scheduling information of at least one of the following channels:
a PUCCH, a PUSCH, a PDCCH, a PDSCH.

15. The method according to claim 13, wherein performing data transmission with the transmission network element group according to the scheduling information of the transmission network element group comprises:
for any transmission network element, performing data transmission with the transmission network element in the transmission network element group according to scheduling information of the transmission network element.

16. A data transmission apparatus, comprising a memory, a transceiver and a processor, wherein
the memory is configured to store a computer program; the transceiver is configured to transmit and receive data under control of the processor; and the processor is configured to read the computer program from the memory and perform following operations:
determining a transmission network element group required for data transmission with a terminal, wherein the transmission network element group comprises at least one first transmission network element and at least one second transmission network element, the first transmission network element belongs to a first distributed unit, and the second transmission network element belongs to a second distributed unit;
generating scheduling information of the transmission network element group, and notifying the terminal through at least one transmission network element in the transmission network element group, for data transmission between the transmission network element group and the terminal.

17. The apparatus according to claim 16, wherein generating the scheduling information of the transmission network element group comprises:
generating, based on resource configuration information of the first transmission network element, scheduling information of the first transmission network element;
and/or,
acquiring resource configuration information of the second transmission network element from the second distributed unit;
generating, based on the resource configuration information of the second transmission network element, scheduling information of the second transmission network element.

18. The apparatus according to claim 16, wherein the processor is further configured to read the computer program from the memory and perform following operations:
notifying the second distributed unit of scheduling information of the second transmission network element.

19. The apparatus according to claim 16, wherein the processor is further configured to read the computer program from the memory and perform following operations:
generating a downlink media access control protocol data unit of the first transmission network element, and sending the downlink media access control protocol data unit of the first transmission network element to the terminal through the first transmission network element; and/or,
generating a downlink media access control protocol data unit of the second transmission network element, and sending the downlink media access control protocol data unit of the second transmission network element to the second distributed unit, wherein the downlink media access control protocol data unit of the second transmission network element is forwarded by the second distributed unit to the second transmission network element, and is sent to the terminal through the second transmission network element.

20. The apparatus according to claim 16, wherein the processor is further configured to read the computer program from the memory and perform following operations:
receiving and parsing an uplink media access control protocol data unit from the terminal sent by the first transmission network element; and/or,
receiving and parsing an uplink media access control protocol data unit from the terminal sent by the second transmission network element forwarded by the second distributed unit.

21. A data transmission apparatus, comprising a memory, a transceiver and a processor, wherein
the memory is configured to store a computer program; the transceiver is configured to transmit and receive data under control of the processor; and the processor is configured to read the computer program from the memory and perform following operations:
receiving a resource request of a second transmission network element sent by a first distributed unit configured for a terminal, wherein the second transmission network element belongs to a second distributed unit configured for the terminal;
sending resource configuration information of the second transmission network element to the first distributed unit, for the first distributed unit to generate scheduling information of the second transmission network element; and notifying the terminal through at least one transmission network element in the transmission network element group, for data transmission between the transmission network element group and the terminal, wherein the transmission network element group comprises at least one first transmission network element and at least one second transmission network element, wherein the first transmission network element belongs to the first distributed unit.

22. The apparatus according to claim 21, wherein the processor is further configured to read the computer program from the memory and perform following operations:
receiving the scheduling information of the second transmission network element and/or configuration information of the second transmission network element sent by the first distributed unit.

23. The apparatus according to claim 21, wherein the processor is further configured to read the computer program from the memory and perform following operations:
receiving a downlink media access control protocol data unit of the second transmission network element sent by the first distributed unit, and sending the downlink media access control protocol data unit of the second transmission network element to the second transmission network element.

24. The apparatus according to claim 21, wherein the processor is further configured to read the computer program from the memory and perform following operations:
receiving an uplink media access control protocol data unit from the terminal sent by the second transmission network element, and sending the uplink media access control protocol data unit to the first distributed unit.

25. A data transmission apparatus, comprising a memory, a transceiver and a processor, wherein
the memory is configured to store a computer program; the transceiver is configured to transmit and receive data under control of the processor; and the processor is configured to read the computer program from the memory and perform following operations:
receiving scheduling information of a transmission network element group sent by a first distributed unit configured for a terminal, the transmission network element group comprising at least one first transmission network element and at least one second transmission network element, wherein the first transmission network element belongs to the first distributed unit, and the second transmission network element belongs to a second distributed unit;
notifying the terminal of the scheduling information of the transmission network element group.

26. The apparatus according to claim 25, wherein the scheduling information of the transmission network element group comprises scheduling information of each transmission network element in the transmission network element group;
the scheduling information of each transmission network element comprises scheduling information of at least one of the following channels:
a PUCCH, a PUSCH, a PDCCH, a PDSCH.

27. The apparatus according to claim 25, wherein the processor is further configured to read the computer program from the memory and perform following operations:
performing data transmission with the terminal based on scheduling information of a local transmission network element.

28. A data transmission apparatus, comprising a memory, a transceiver and a processor, wherein
the memory is configured to store a computer program; the transceiver is configured to transmit and receive data under control of the processor; and the processor is configured to read the computer program from the memory and perform following operations:
receiving scheduling information of a transmission network element group through at least one transmission network element in the transmission network element group, wherein the transmission network element group comprises at least one first transmission network element and at least one second transmission network element, wherein the first transmission network element belongs to a first distributed unit and the second transmission network element belongs to a second distributed unit;
performing data transmission with the transmission network element group according to the scheduling information of the transmission network element group.

29. The apparatus according to claim 28, wherein the scheduling information of the transmission network element group comprises scheduling information of each transmission network element in the transmission network element group;
the scheduling information of each transmission network element comprises scheduling information of at least one of the following channels:
a PUCCH, a PUSCH, a PDCCH, a PDSCH.

30. The apparatus according to claim 28, wherein the performing data transmission with the transmission network element group according to the scheduling information of the transmission network element group, comprises:
for any transmission network element, performing data transmission with the transmission network element in the transmission network element group according to scheduling information of the transmission network element.

31. A data transmission apparatus, comprising:
a transmission network element group determining unit, configured to determine a transmission network element group required for data transmission with a terminal, wherein the transmission network element group comprises at least one first transmission network element and at least one second transmission network element, the first transmission network element belongs to a first distributed unit, and the second transmission network element belongs to a second distributed unit;
a scheduling unit, configured to generate scheduling information of the transmission network element group, and notify the terminal through at least one transmission network element in the transmission network element group, for data transmission between the transmission network element group and the terminal.

32. The apparatus according to claim 31, wherein generating the scheduling information of the transmission network element group comprises:
generating, based on resource configuration information of the first transmission network element, scheduling information of the first transmission network element;
and/or,
acquiring resource configuration information of the second transmission network element from the second distributed unit;
generating, based on the resource configuration information of the second transmission network element, scheduling information of the second transmission network element.

33. A data transmission apparatus, comprising:
a resource request receiving unit, configured to receive a resource request of a second transmission network element sent by the first distributed unit configured for a terminal, wherein the second transmission network element belongs to a second distributed unit configured for the terminal;
a resource configuration sending unit, configured to send resource configuration information of the second transmission network element to the first distributed unit, for the first distributed unit to generate scheduling information of the second transmission network element; and notify the terminal through at least one transmission network element in the transmission network element group, for data transmission between the transmission network element group and the terminal, wherein the transmission network element group comprises at least one first transmission network element and at least one second transmission network element, wherein the first transmission network element belongs to the first distributed unit.

34. A data transmission apparatus, comprising:
a scheduling information receiving unit, configured to receive scheduling information of a transmission network element group sent by a first distributed unit configured for the terminal, the transmission network element group comprising at least one first transmission network element and at least one second transmission network element, wherein the first transmission network element belongs to the first distributed unit, and the second transmission network element belongs to a second distributed unit;
a scheduling information notifying unit, configured to notify the terminal of the scheduling information of the transmission network element group.

35. A data transmission apparatus, comprising:
a scheduling information acquiring unit, configured to receive scheduling information of a transmission network element group through at least one transmission network element in the transmission network element group, wherein the transmission network element group comprises at least one first transmission network element and at least one second transmission network element, wherein the first transmission network element belongs to a first distributed unit and the second transmission network element belongs to a second distributed unit;
a transmission unit, configured to perform data transmission with the transmission network element group according to the scheduling information of the transmission network element group.

36. A non-transitory computer-readable storage medium, wherein the non-transitory computer-readable storage medium stores a computer program for enabling the processor to execute the method according to any one of claims 1 to 15.
